# EUROPEAN PATENT APPLICATION

(11) **EP 3 355 184 A1**
(43) Date of publication of application: **01.08.2018**
(21) Application number: 17305103.8
(22) Date of filing: 31.01.2017
(51) Int. Cl.: G06F 9/44, G06F 11/14

(54) **A METHOD FOR GENERATING A DELTA FILE FOR IN-PLACE UPDATING OF MEMORY CONTENT AND A METHOD FOR MEMORY UPDATING**

(71) Applicant: Sequans Communications, 92700 Colombes (FR)
(72) Inventor: BERTORELLE, Jérôme, 92700 Colombes (FR)
(74) Representative: CMS Cameron McKenna Nabarro Olswang LLP

(57) **Abstract**

A method for generating a delta file for in-place, incremental updating of memory content, where the content is updated block by block, includes creating a virtual file pair (300, 301) per update block representing current content of the memory (105) and new content of an updated block, generating incremental delta instructions for each block update from the virtual files; and concatenating all the delta update instructions for each block update to produce a delta file. The memory to be updated by the delta file may contain a Flash File System which can be used for holding history data containing the content of the block currently being updated and its identity. After a reset or crash, the history data can be interrogated (410) to determine a re-starting point for resumption of the update process.

## Description

### Technical Field

This present invention generally relates to in-place delta updating of memory content and has particular application to small, Internet-of-Things devices and devices containing a Flash File System (FFS).

### Background

A delta update process consists of updating of an existing memory content (of a device) by sending a small difference file (or "delta" file, also sometimes referred to as a "patch" file or a "delta patch") to the device rather than sending a completely new version. One known method supports two "banks." When the device runs software stored in the first bank, the update process generates and writes the new version into the second bank. Only when the second bank content has been verified will the device use the second bank for operation. However, the use of two banks requires a relatively large flash memory size and for small Internet-of-things devices where cost is critical it is desirable to use only a single bank. A known update process which relies on a single bank is often called an "in place" update and is an incremental process as an old version is gradually replaced and overwritten by the new version during the update. Typically, a delta file comprises a series of instructions for building the new version from parts of the old version and new material that was not present in the old version. For example, a delta file may be formatted with a "COPY" family of instructions for reusing part of the old version content to build a new version, and an "ADD" family of instructions (sometimes called "insert") which adds the new material. Other types of instruction will be familiar to those skilled in the art.

Due to constraints on available flash memory resources on the device however, it may not always be possible to carry out a COPY instruction because the section to be copied from the old version may have already been updated/overwritten with the new version. This issue is known as "read after write" (RAW) conflict and steps must be taken to ensure that the delta file sent to the device does not contain any such conflicts. Methods which comprise post-processing of the delta file before it is sent to the device have been proposed for removing such conflicts.

Another requirement is that the update process be robust in the event of a crash, a reset or any other type of interruption that could occur during the update process. When the system restarts, it is required that the update process should be able to recover and continue up to a successful conclusion.

Hence, there is a need for a method for generating a delta file for performing a delta update with improved performance over known update processes.

### Summary

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

According to a first aspect the present invention there is provided a method for generating a delta file for in-place, incremental updating of content in a memory of a device, wherein the content is updated block by block, the method comprising, at a remote processing unit; creating at least one pair of virtual files per update block wherein a source virtual file represents current content of the device's memory and a target virtual file represents new content of the updated block, generating incremental delta instructions for each block update from the at least one pair of virtual files; and concatenating all the delta update instructions for each block update to produce a delta file.

Generating the incremental data instructions for each block from the virtual files may be done using a conventional process (such as the open source bsdiff algorithm for example).

Using known techniques, the problem of RAW conflicts arises from building a delta file from data that may not be available when the update is being performed on the device. This is why the original delta file (prior to the post-processing mentioned above) may contain copy from already overwritten data. In particular, this is a result of building the delta file from a file containing the old version of memory content and from a file containing the new version of memory content. For an incremental update process where discrete blocks of memory are being updated in sequence, neither of these files are necessarily representative of the content of the device's memory during an update of each block.

In contrast, a method in accordance with an embodiment of the invention builds a delta file using virtual files rather than from a file containing the old version of memory content and a file containing the new version of memory content. The virtual files represent the content of the device's memory during an update.

In particular, the invention permits an incremental delta instruction for a given update block ("N" say) to be built from a virtual file representing not the old version (or the new version) but all the information available on the device when updating block N. Adding new block content (for block N) to the incremental delta instruction provides delta update instructions for block N. A full system update (delta file) is then the concatenation of all per-block delta update instructions, in the order of block updates.

Thus, by virtue of the invention, the read after write conflict does not arise.

According to a second aspect of the invention there is provided a method for updating a memory of a device, the method comprising: at the device, receiving a delta file comprising update instructions generated in accordance with the first aspect of the invention; executing said update instructions; and storing a history data in the memory, said history data comprising content of a block currently being updated. An identity of the block may also be stored. The history data may also comprise old material already overwritten. The history data may be contained in one or more files which are written into a part of the memory which is managed by a Flash File System.

The method for updating a memory of a device may further include, on resumption of an update process following an interruption of said update process, at the device, interrogating the history file to determine a restart point for resumption of the update process. Thus, the invention provides a robust update process which can recover from interruptions due to crash, reset or shut-down owing to extreme temperatures, for example.

The method for updating a memory of a device may further include, at the device, executing a memory address re-mapping process.

According to a third aspect of the invention, there is provided a non-transitory computer readable medium having computer readable instructions stored thereon for execution by a processor to perform the methods according to either of appended claims 1 or 2.

According to a fourth aspect of the invention, there is provided a non-transitory computer readable medium having computer readable instructions stored thereon for execution by a processor to perform the methods according to appended claims 3-9.

The non-transitory computer readable medium may comprise at least one from a group consisting of: a hard disk, a CD-ROM, an optical storage device, a magnetic storage device, a Read Only Memory, a Programmable Read Only Memory, an Erasable Programmable Read Only Memory, EPROM, an Electrically Erasable Programmable Read Only Memory and a Flash memory.

### Brief description of the drawings

Further details, aspects and embodiments of the invention will be described, by way of example only, with reference to the drawings. Elements in the figures are illustrated for simplicity and clarity and have not necessarily been drawn to scale. Like reference numerals have been included in the respective drawings to ease understanding.
Figure 1 is a simplified block diagram of a system for generating a delta file for in-place updating of memory content in accordance with an embodiment of the invention;
Figure 2 illustrates a state of a system Flash memory during an update process;
Figure 3 illustrates virtual files representing states of a system Flash memory during an update process; and
Figure 4 is a simplified flowchart illustrating an example of a method of generating a delta file and performing an incremental in-place delta update.

### Detailed description of the preferred embodiments

Those skilled in the art will recognise and appreciate that the specifics of the examples described are merely illustrative of some embodiments and that the teachings set forth herein are applicable in a variety of alternative settings.

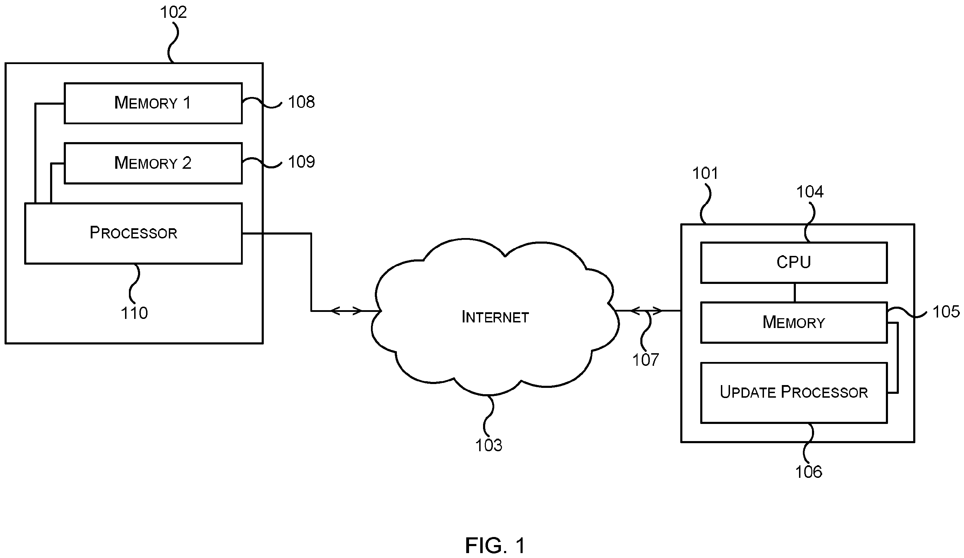

Figure 1 shows a device 101 and a server 102, each capable of communicating with each other over a network which in this example is the Internet 103. The device 101 may be for example a low-cost household-based, battery-powered meter for monitoring and reporting usage of a utility such as gas or water. The device 101 includes a central processing unit (CPU) 104 for controlling the function of the device, a memory 105 connected to the CPU or storing data and instructions for operating the device and an update processor 106 connected to the memory. The instructions stored in the memory may be periodically updated with the assistance of the update processor 106 on receipt of a delta file received over an Internet communications link 107. The content stored in the memory 105 prior to an update is referred to herein as "old content." Following an update process, the content stored in the memory 105 is referred to herein as "new content." The memory 105 includes a Flash File System FFS and in addition to storing the old and new content, may be used to store one or more "history files" which contain the content of a block of memory content currently being updated and an identity of the block. The content of older versions of already updated blocks may also be stored. The update processor 106 may be arranged to interrogate a history file to determine a restart point for resumption of an update process following an interruption of the update process. The update processor 106 may also be arranged to execute a memory address re-mapping process to be explained in greater detail below. The memory 105 is typically a persistent storage memory (e.g. Flash) with a part of it managed by a robust (crash-proof) filesystem such as a Flash File System. Typically, the update processor includes some RAM (Random Access Memory) (not shown). In some embodiments, the update processor may be included in the CPU.

The server 102 includes a first memory 108 (Memory 1) in which is stored the same "old content" as is initially stored in the device's memory 105. The server also includes a second memory 109 (Memory 2) in which is stored "new content" which at some future time will replace the old content in the device's memory 105 as a result of an updating process. The server 102 also includes a processor 110 which is connected to Memory 1 and Memory 2. The processor 110, in an emulation procedure, is arranged to create virtual files which represent the current content of the device's memory 105 during an update of each block of memory content. From the virtual files, the processor 110 then generates incremental delta instructions for each block from the virtual files; and concatenates all the delta update instructions for each block to produce a delta file. The generated delta file is then sent to the device 105, over the Internet 103, for updating the "old content" in the device's memory 105 to the "new content." In alternative embodiments, the Memories 1 and 2 and the processor 110 may be included in a PC rather than a server. The delta file generation process may be carried out at or by a different entity to the entity which distributes the delta file to the device 101 (and typically, many other devices too) over the Internet 103 or cellular network, for example.

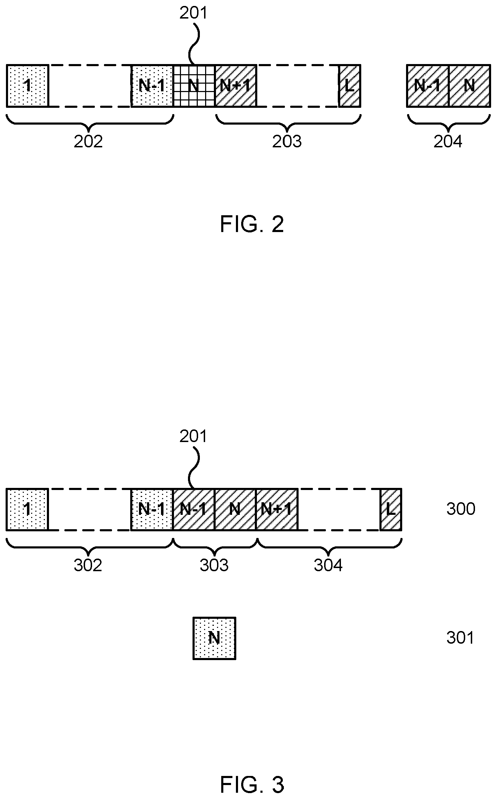

An example of a method for generating a (RAW conflict-free) delta file will now be given with reference to Figures 2 and 3. The term "gen_delta" defines a generic delta process to build a delta patch from an old version and a new version, and the term "app_delta" refers to the matching application process. This can be any delta process. The method does not depend on the specifics of the delta process, and can be readily adapted to different ones.

Considering two files "old" and "new", we have:
patch = gen_delta(old, new)
new = app_delta(old, patch)

In known systems, the "gen_delta" process is indeed applied to the full old and new versions, and the patch result is post-processed to make it applicable incrementally on a target using a modified application process. In contrast, in this example embodiment of the invention, the generation part is instead applied between two virtual files and the application process is also modified to take this into account.

A robust update must back-up the updated block, either old or new content as part of the update process. In this example, the old content is backed-up and used for the delta process in order to maximise the available information usable for "COPY"-like operations. Actually more than the current block can be preserved into a history (file), which must at least include the currently updated block but may cover more. The history may be managed in an FFS to be described below. In the example below, a history of up to two update blocks is used.

Assume for simplicity a sequential update where block number 1 is first updated then block number 2, etc. up to L, in order of memory addresses in Flash. This scheme can be easily extended to an arbitrary order where the generation process decides on an update order, maximizing "COPY"-like operations. This order information is provided to the "target" i.e. the device 105, so that the update can be done accordingly. Then when processing the update block N, the previous block(s) (if any) have been updated already, while the following block(s) (if any) still contain the old content.

The state of the system Flash (memory 105) can be represented by the diagram of Figure 2. Block N, 201 is currently being updated and so blocks 1 to (N-1) 202 contain new content but blocks (N+1) to L, 203 still contain old content. The image is stored in a sequence of Flash blocks, making L update blocks (where the last block L may be smaller than the update size). The history can be stored in the FFS in the memory 105 on the device 101 and so is available to the update process. Figure 2 also illustrates the state of a typical history file storing the old content 204 of block N and the preceding block N-1.

The physical content of the update block N in Flash memory 105 cannot be directly used in the case of a restart after a crash, when the crash followed an erase because the old content may be gone. Depending on whether a crash and restart occurred or not and when, the content of a block N in Flash may also vary and cannot be relied upon. However, the old content has been preserved in the history file, and this can be relied upon to be available. As can be seen in the example of Figure 2, depending on the history file size, some update blocks may be present in both their old and new versions, like the update block N-1 here.

The delta generation process (carried out by processor 110) for an update block N is applied to two virtual files V1, V2 (which have been created by the processor 110). Figure 3 is a representation of these two virtual files 300 and 301. The first virtual file 300 includes new content 302 for blocks 1 to (N-1), the history 303 comprising old content for blocks (N-1) and N, and old content 304 for blocks (N+1) to L. The second virtual file 301 includes the new content of block N.

The target file for the patch generation (and application later on) is simply the new updated block content, while the original file simply maps all the available content on the target at the time block N is processed.

The patch data for the update block N is then:
patchN = gen_delta(V1, V2)

When generating the patch data on a PC or a server, it is a simple matter to generate the content for V1 and V2 from the old and new versions and apply the delta generation process to this material. It can be seen that the delta content can only reference data present on the target at the time when the update block N is processed, although the addresses may be different.

On the target (e.g. the device 101 of Figure 1), applying the delta file can, for the most part follow a conventional process (using the update processor 106), with the modification that an address remapping is required. With the example above, any "COPY"-like operation can be split into ranges falling entirely into the "New", "History" and "Old" sections (sections 302, 303 and 304 respectively of Figure 3). Then: an offset into the "New" section of the virtual file V1 is simply remapped to the same offset into the Flash image storage area of memory 105; an offset into the "History" section is mapped to the stored history in memory 105; an offset into the "Old" section is added the corrective factor "I - H" where "I" is the length of the current update block N, and H the current history length. The new updated offset will point to the actual material stored into the not-yet-updated part of the Flash image storage area of memory 105.

It will be appreciated that the order of the "New", "History" and "Old" sections in the virtual V1 file 300 is arbitrary. Any order can be used, as long as consistency between the patch generation process and the target application process is maintained. A different order will lead to a different remapping process, which can be constructed on the model of the example given above.

It will also be appreciated that for the first block (N = 1) the "New" section will be empty, while with a larger new version, at some point the "Old" section may be empty. Further, the size of the history may vary. Additionally, the update process does not have to use fixed size update blocks, although fixed, equally-sized blocks are preferred at least from the point of view of minimising complexity. Even with a fixed update block size, it will be appreciated that the last updated block will typically not be full. In this case, the update process may only use the actual file content part of the last block, or the full block if any padding content is deterministic and can be reliably factored-in at the time of generating the delta file.

The method described above with reference to Figures 2 and 3 can also be easily extended to a non-sequential update process, as long as the update order is deterministic. This can be guaranteed by including the update order in the final patch (delta) file which is sent to the device 101. In this case, there will typically not be a fully "New" preceding section and an "Old" following section but a more complex mix of old and new versions blocks. This will create no problems as long as the virtual V1 file 300 only includes data present on the target (i.e. memory 105) when the update block N is processed, and the remapping can be done deterministically on the target(using the update processor 106). So all the schemes which optimise the delta file by re-ordering block updates can be adapted to this conflict-free generation scheme. Note that even though the described method may guarantee that the generated patch content is immediately free of RAW conflicts by construction, the generated delta efficiency still depends on the available material and hence on the update ordering.

Optionally, the virtual file V1 can be extended to include additional sections if desired. For example, it is a straightforward matter to add a "protection" section containing protected old content. The only constraint is that the generation process must be able to anticipate the exact content that the added sections will have on the target when updating a given block.

For any delta file generation process, efficiency means maximising the "COPY"-like commands. In the context of the described method above with reference to Figures 2 and 3, such commands typically refer to the old content, as in the "History" and "Old" sections 303, 304. The "Old" part 304 is a result of the update process and can only be influenced by the block update ordering. However, the history part 303 is more flexible and could use varying update mechanisms to be explained herebelow. The "New" content may, optionally, also be used with "COPY" commands, but typically in a more limited fashion, to exploit self-similarity in different parts of the same file. Although the new content is typically much less effective in maximising COPY than the old content, it is still useful as this information is readily available on the target (device 101). It can be seen as an opportunistic use in the delta process, which is normally only focused on the old version data for "COPY" commands. If it is desired to simplify and speed up the delta generation process, then no "New" section is included in the virtual file V1.

From a high-level point of view, the full system patch (delta file) can be seen as the concatenation of each update block delta patch data in update block order. This can be done independently (or in the processor 110) using a specific delta algorithm. For some applications, it may be more efficient to integrate the various blocks' delta material in a format-specific way. For example, a generated patch (delta file) will typically have a header. Instead of having a full header for each block, it is typically possible to have a single header for the whole final system patch delta file. The start and stop of each block can be implicit knowing each block size: where a block ends and the next start is when its content has been fully generated. This reduces the header overhead.

Other similar optimisations are possible, and will depend on the specifics of the chosen delta process. For example using the known bsdiff patch format a delta is made up of three streams: the commands stream; the "difference" stream, whose content is mostly made of zeros and highly compressible; and the "extra" stream, for added content. The update process keeps a reference offset into the old version. Each command is a triplet (D, E, O) of 3 numbers processed in order where: D is an unsigned number of difference bytes. D bytes from the old version at the current offset position will be used and added to D bytes of the difference stream and inserted into the new version under construction. The offset into old is also incremented by D; E is an unsigned number of extra bytes. E bytes from the extra streams will be copied into the new version under construction; and O is a signed offset change, to be added to the offset into the old reference file. Each stream can be compressed independently, and decompressed on the fly during the delta application. Reconstructing the new version amounts to applying the command triplets in order. The header of a bsdiff patch defines the starting offsets of each stream in the file. As there is a lot of commonality across blocks, rather than concatenating by compressing each update block's streams independently, per block, it is more efficient to merge all the blocks' command streams together and compress this as a single stream, and do the same for the other two streams. The compression efficiency is then improved.

Another example of more limited optimisation with bsdiff relates to offset. The last offset of a delta file is useless. Also, for update blocks not at the start of the image, the first command is likely to be of the form (0, 0, <offset>) where the offset only is non-null. When this is the case, this command can be removed and the offset put into the previous block's last offset. Otherwise, the previous last offset is set to zero. Such optimisations are specific to the chosen format and still require the remapping process.

When generating a delta file using the complete old and new versions, the delta generation mechanism may be able to find large opportunities for copying. Such "COPY"-type commands may span several blocks. When using a known delta file generation process in conjunction with aspects of the invention as described herein, a copy that may have spanned "n" update blocks in the "whole file" conventional delta generation will lead to "n" commands, one for each spanned update block, assuming that such copy can still be done in its entirety of course. So in general, splitting the incremental process into small update blocks will lead to more commands being generated and more overhead in the final delta file. Comparatively larger update blocks will be more efficient than smaller ones.

Also, a great part of the delta generation processing cost is the indexing of content into the old version. While this is done once for a conventional "whole file" delta generation, with the methods of the invention disclosed herein, this will be done once per new version update block. A small update block size will then tend to increase the generation processing cost. This is typically not a problem, as the generation is performed once and can be done on a powerful machine (e.g. the server 102), and can be done in a reasonable duration in practice. This consideration favours larger update blocks too. However, because the current block content must be backed-up, a large update block size will increase the Flash usage for back-up. This will put a practical limit to the update size, depending on the available storage on a given device.

It is known to back-up an update block in an ad-hoc fashion in raw Flash blocks dedicated to this function. This is common for simple devices. However some devices are also capable of dedicating part of their Flash content to a file system, offering the usual directories and files management services through a Flash File System (FFS). For these devices, it becomes possible to exploit this FFS for the in-place update back-up, and also to extend this back-up process to cover a larger history than the currently processed block content. It will be understood from the foregoing that a larger available history will increase the opportunity for "COPY"-like operations and improve the delta process efficiency. FFS are designed for robustness and they do not normally get corrupted by unexpected crashes or power interruptions and file operations tend to be either properly applied or ignored. An FFS can provide guarantees that once a file has been written to and has been synchronised, it will be reliably available even in the presence of crash or unexpected resets. So an FFS can provide a robust, reliable storage solution for back-up and history using a convenient high-level file interface.

A challenging property of Flash storage is where each block can only be erased a certain number of times before it can be expected to fail, this number depending on the Flash characteristics and the environment (primarily the temperature). To maximise the life span of a device (such as the device 101 of Figure 1) using Flash, it is beneficial to spread the usage of Flash evenly across blocks. This is typically not a concern for the parts of the Flash directly used to store code in raw Flash sectors if updates are rare enough for wear not to be a concern. However, a typical FFS can manage wear levelling. Guaranteeing a given life span for a device, given a volume of writing, may require having enough blocks available in the FFS and in particular, to have sufficient free space to avoid a problem known as "write amplification". This means that a device designed for a long operating life, as is common for many IoT applications, may be expected to have on average some free space available in its file system. This free space can temporarily be used for the in-place update process, to store back-up and history.

From the foregoing, it will be appreciated that if some history of block updates is preserved during the update process, then the efficiency of the delta update process increases because opportunities for efficient "COPY"-like operations are increased. In addition, use of the FFS content can help to identify at which stage an update process was interrupted in the event of a crash. Methods for ensuring current block back-up, optionally preserving additional history and identifying an update stage will now be described.

There is a current interest in having large update blocks, made of several Flash blocks. However, pushed to an extreme, the FFS free space may only accommodate a single update block, with additional free space but not sufficient for another update block. For example, the FFS free space may amount to 1.8 update blocks. It is desirable to be able to use as much of the FFS free space as possible, in order to maximise the available history. On the other hand, because the update must be deterministic and the amount of history is decided when generating the delta file, the chosen value must be such that the updated device can accommodate it, taking into account possibly different FFS usage patterns. But within this constraint of guaranteeing availability of the expected history size, it is desirable to maximise the use of the FFS for history. On the other hand, because of the high requirement on robustness it is important to keep the process simple and easy to verify.

Preferably, to strike a balance between a small granularity of the history size and simplified management, an exemplary method configures a history block size such that the update block size is an integer multiple of the history block size. The history block size needs not be a multiple of the Flash block size, as the FFS isolates raw Flash blocks. As an example, with a free space at least equivalent to 1.8 update blocks, a history block size of one fifth of the update block size allows using all the free space with nine history blocks. In addition to the history block size, the method sets a preferred maximum number of history blocks to preserve. This number is set such that at least a full update block can be preserved in history. This ensures that the history can also be used to back-up the current update block full content. Preferably, the number is small enough so that all updated devices (should there be more than one) have this free space available. Application of the invention to a large number of devices creates the incentive to minimise the size of the sent delta, to reduce the network traffic and costs of an upgrade.

Let "m" be the number of history blocks in one update block, and M the maximum number of history blocks maintained in the history. The preferred "current update block "back-up" constraint means that M is greater than or equal to m.

In this example, one FFS file is used per history block. The file name can be arbitrary, but will preferably allow recovering the associated update block index and the history block sequence number, and will sort all the history files in a deterministic order normally associated with their location in the old image. For the history block sequence number, it is sufficient to retrieve the sequence index which is inside the associated update block.

An example valid name is "< u > - < i >. Hist" where < u > is the associated update block index, and < i > is the index inside the update block, for example counted from 0 (first history block in the update block) to m-1 (last). As an example with an update block being made of two history blocks, the old image first history blocks would be associated with the following names: 0-0.hist, 0-1.hist, 1-0.hist, 1-1.hist, 2-0.hist, etc.

The process of updating the history is the same as backing-up a currently processed update block. Before processing the delta instructions associated with a currently updated block, this block must be pushed to the history. If the current update block size is H history blocks, with H equal to m except, possibly for the last update block, then: if the total number of history blocks in the FFS is T (with T possibly zero for the first update block), then let E = max ((T+H)-M, 0). If E is non-null, then the oldest E history files are erased, based on their names. This will make sure that there is room enough to back up the current update block, while keeping as much history as possible up to M history blocks. Next, the H new history blocks corresponding to the currently processed update block are written. This ensures that the last M history blocks are kept. A lexicographical sort based on the history blocks names can be used to return the history blocks in the order of their associated addresses in the updated raw Flash bank (of the memory 105, for example). This order also corresponds to the content used for the virtual V1 file in the delta generation process. It will be noted that the number of history files Hf available for an update block of index U is min (M, U*m), where U indexing is zero-based.

As part of the delta application process, some "COPY"-like operations can refer to a range of the current history, as used in the virtual V1 file. Assume this range is defined by the start and end byte offsets S and E in the history content. If Hb is the size in bytes of a history block, then these offsets can be readily mapped to specific history files and offsets inside the file. For example for S:
Si = S div Hb (where "div" is the integer division and Si is a file number)
So = S mod Hb (where "mod" is the integer modulo operation and So is an offset)

If all the current FFS history files are sorted in lexicographical order based on their names, and numbered from 0 for the oldest file onward, then Si will point to the file number Si. Inside this file, the starting position will be at offset So (counting from 0) from the start of the file. The same can be done for the end offset. With the start and end positions determined as such, and the current history files ordered and numbered too, it is a simple matter to deterministically extract from the file the exact sequence of bytes needed by the "COPY"-like operation. For example,
If Si = Ei, then directly use the range [So, Eo] inside the file number Si;
If Ei > Si, then the byte range is made up of the following byte sequences concatenated in order: (1) The range [So, Hb-1] in the file with index Si; (2) The content of all the files, if any, with sequence number between Si+1 and Ei-1; (3) The range [0, Eo] in the file with index Ei.

Thus, use of an FFS included in the memory 105 can reliably maintain a combined back-up and history by exploiting the crash robustness of a FFS. It can be seen that the process can be modified in many ways, e.g. by storing several history blocks in one file, making variations to the naming, including, (or not), possible end padding in the history (similarly as for the delta file generation). Once the full in-place update is complete, the history content can be erased to free FFS space for other use.

Identifying a restart point after a crash or after any interruption in the delta update process can be directly derived from the FFS content. For example, on boot: if there is a delta to apply, but no history file in the FFS of the memory 105, then the delta application can be started from its beginning. Alternatively, if, on boot, there are history files in the FFS and U is the highest update block index found, it is straightforward to derive the expected history files for block U, and compare this to the actual FFS content. If the full history is present on boot, then it can be inferred that the interruption occurred sometime between the current block U back-up and its update. It is preferable to restart the process at U in this case, that is, regenerate and rewrite the update block U in the image Flash and continue from there. If the full expected history is not present in the FFS on boot and at least one oldest file is missing; then If U was the last update block, it can be inferred that the interruption occurred after the update was complete but before the history was fully cleaned-up and so the history can be erased; otherwise, it can be inferred that the interruption occurred when starting processing for block U+1, while removing too old history block(s) before backing-up update block U+1 and then the method can progress to determine the excess history block(s) as before, erase them, and continue with the back-up and processing of update block U+1. On the other hand, if the full expected history is not present and at least one new block is missing, it can be inferred that the interruption occurred while backing-up update block U. All the written files can be assumed to be consistent per the FFS robustness guarantee. The process can continue by completing the back-up and continuing with delta upgrading update block U.

Rather than making the inferences mentioned above in order to derive the step at which an interrupted update process must be re-started, a current step in the update process can be made explicit by writing marker files at each key stage (and erasing old markers afterwards), or by updating a log file containing the current step. The log file option is particularly simple, and typically uses very little space in the FFS. It depends on the FFS providing facilities to do atomic additions to the end of a file (append), which is typically the case.

Advantageously, using a FFS to support a combined back-up, history and stage check pointing scheme pushes most of the robustness complexity outside the in-place delta upgrade, exploiting instead a proven FFS component with native crash robustness. It also enables, on a restart after an interruption, deriving the recovery stage by just looking at the history files present in the FFS. Using a FFS also either reduces the need for using back-up blocks for the in-place update, or at least allows sharing those blocks with the FFS. The former reduces the Flash footprint, the latter increases the device lifetime by improving wear levelling.

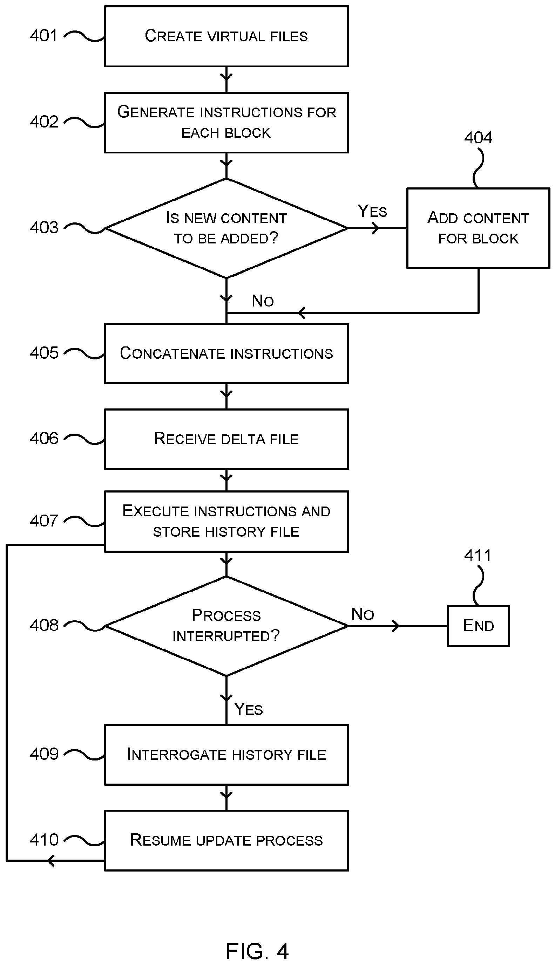

Reference will now be made to Figure 4 which is a simplified flowchart illustrating an example of a method of generating a delta file and performing an incremental in-place delta update. At 401, virtual files 300, 301 (see Figure 3) are created from an old version of memory content (comprising L blocks) and a new (target) version of memory content (comprising L blocks). At 402, incremental delta instructions are generated for each block from the virtual files. At 403, if it is determined that content is to be added for a particular block, then at 404, new content is added for that block and the process proceeds to step 405. If no content is to be added for a particular block, then the process proceeds directly to step 405 where all data update instructions for each block are concatenated to produce a delta file.

At 405, the delta file is received at a target device. At 406, the instructions in the delta file are executed incrementally (including an address remapping process) and a history file is stored in an FFS of the target device. At 408, if the update process is interrupted before its completion, then, prior to resumption, the history file is interrogated (at 409) and a re-start point is deduced. Then, at 410, the update process can resume from the re-start point, revert to 407 and then continue to the end of the update process at 411.

The signal processing functionality of the embodiments of the invention especially the processor 110 may be achieved using computing systems or architectures known to those who are skilled in the relevant art. Computing systems such as, a desktop, laptop or notebook computer, hand-held computing device (PDA, cell phone, palmtop, etc.), mainframe, server, client, or any other type of special or general purpose computing device as may be desirable or appropriate for a given application or environment can be used. The computing system can include one or more processors which can be implemented using a general or special-purpose processing engine such as, for example, a microprocessor, microcontroller or other control module.

The computing system can also include a main memory, such as random access memory (RAM) or other dynamic memory, for storing information and instructions to be executed by a processor. Such a main memory also may be used for storing temporary variables or other intermediate information during execution of instructions to be executed by the processor. The computing system may likewise include a read only memory (ROM) or other static storage device for storing static information and instructions for a processor.

The computing system may also include an information storage system which may include, for example, a media drive and a removable storage interface. The media drive may include a drive or other mechanism to support fixed or removable storage media, such as a hard disk drive, a floppy disk drive, a magnetic tape drive, an optical disk drive, a compact disc (CD) or digital video drive (DVD) read or write drive (R or RW), or other removable or fixed media drive. Storage media may include, for example, a hard disk, floppy disk, magnetic tape, optical disk, CD or DVD, or other fixed or removable medium that is read by and written to by media drive. The storage media may include a computer-readable storage medium having particular computer software or data stored therein.

In alternative embodiments, an information storage system may include other similar components for allowing computer programs or other instructions or data to be loaded into the computing system. Such components may include, for example, a removable storage unit and an interface , such as a program cartridge and cartridge interface, a removable memory (for example, a flash memory or other removable memory module) and memory slot, and other removable storage units and interfaces that allow software and data to be transferred from the removable storage unit to computing system.

The computing system can also include a communications interface. Such a communications interface can be used to allow software and data to be transferred between a computing system and external devices. Examples of communications interfaces can include a modem, a network interface (such as an Ethernet or other NIC card), a communications port (such as for example, a universal serial bus (USB) port), a PCMCIA slot and card, etc. Software and data transferred via a communications interface are in the form of signals which can be electronic, electromagnetic, and optical or other signals capable of being received by a communications interface medium.

In this document, the terms 'computer program product', 'computer-readable medium' and the like may be used generally to refer to tangible media such as, for example, a memory, storage device, or storage unit. These and other forms of computer-readable media may store one or more instructions for use by the processor comprising the computer system to cause the processor to perform specified operations. Such instructions, generally referred to as 'computer program code' (which may be grouped in the form of computer programs or other groupings), when executed, enable the computing system to perform functions of embodiments of the present invention. Note that the code may directly cause a processor to perform specified operations, be compiled to do so, and/or be combined with other software, hardware, and/or firmware elements (e.g., libraries for performing standard functions) to do so.

In an embodiment where the elements are implemented using software, the software may be stored in a computer-readable medium and loaded into computing system using, for example, removable storage drive. A control module (in this example, software instructions or executable computer program code), when executed by the processor in the computer system, causes a processor to perform the functions of the invention as described herein.

Furthermore, the inventive concept can be applied to any circuit for performing signal processing functionality within a network element. It is further envisaged that, for example, a semiconductor manufacturer may employ the inventive concept in a design of a stand-alone device, such as a microcontroller of a digital signal processor (DSP), or application-specific integrated circuit (ASIC) and/or any other sub-system element.

It will be appreciated that, for clarity purposes, the above description has described embodiments of the invention with reference to a single processing logic. However, the inventive concept may equally be implemented by way of a plurality of different functional units and processors to provide the signal processing functionality. Thus, references to specific functional units are only to be seen as references to suitable means for providing the described functionality, rather than indicative of a strict logical or physical structure or organisation.

Aspects of the invention may be implemented in any suitable form including hardware, software, firmware or any combination of these. The invention may optionally be implemented, at least partly, as computer software running on one or more data processors and/or digital signal processors or configurable module components such as FPGA devices. Thus, the elements and components of an embodiment of the invention may be physically, functionally and logically implemented in any suitable way. Indeed, the functionality may be implemented in a single unit, in a plurality of units or as part of other functional units.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term 'comprising' does not exclude the presence of other elements or steps.

Furthermore, although individually listed, a plurality of means, elements or method steps may be implemented by, for example, a single unit or processor. Additionally, although individual features may be included in different claims, these may possibly be advantageously combined, and the inclusion in different claims does not imply that a combination of features is not feasible and/or advantageous. Also, the inclusion of a feature in one category of claims does not imply a limitation to this category, but rather indicates that the feature is equally applicable to other claim categories, as appropriate.

Furthermore, the order of features in the claims does not imply any specific order in which the features must be performed and in particular the order of individual steps in a method claim does not imply that the steps must be performed in this order. Rather, the steps may be performed in any suitable order. In addition, singular references do not exclude a plurality. Thus, references to 'a', 'an', 'first', 'second', etc. do not preclude a plurality.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognise that various features of the described embodiments may be combined in accordance with the invention. In the claims, the term 'comprising' or "including" does not exclude the presence of other elements.

## Claims

1. A method for generating a delta file for in-place, incremental updating of content in a memory (105) of a device (101), wherein the content is updated block by block, the method comprising, at a remote processing unit (102); creating at least one pair of virtual files (300, 301) per update block wherein a source virtual file (300) represents current content of the device's memory (101) and a target virtual file (301) represents new content of the updated block, generating incremental delta instructions for each block update from at least one pair of source and target virtual files; and concatenating all the delta update instructions for each block update to produce a delta file.

2. The method of claim 1 wherein the source virtual file (300) for a block "N" includes a new content portion (302) for blocks 1 to (N-1), a history portion (303) comprising old content for blocks (N-1) and N, and an old content portion (304) for blocks (N+1) to L and wherein the target virtual file (301) includes the new content of block N, where N and L are integers and L is a total number of blocks.

3. A method for updating a memory (105) of a device (101), the method comprising: at the device (101), receiving (406) a delta file comprising update instructions generated in accordance with either of claims 1 or 2, executing (407) said update instructions; and storing (407) history data (204) in the memory (105), said history data (204) comprising, at least, content of a block currently being updated and an identity of the block.

4. The method of claim 4 including, at the device (101), executing (407) a memory address re-mapping process.

5. The method of claim 3 or claim 4 wherein the history data (204) comprises old content of a block N and old content of an immediately preceding block (N-1).

6. The method of any of claims 3 to 5 wherein the memory (105) includes a crash-proof file system and wherein the method further includes storing (407) the history data in one or more history files (204) in the crash-proof file system.

7. The method of claim 6 including, on resumption (410) of an update process following an interruption (408) of said update process, at the device (101), interrogating (409) a history file (204) to determine a restart point for resumption of the update process.

8. The method of claim 6 including configuring a block size of a history file (204) such that an updated block size is an integer multiple of the history file block size.

9. The method of claim 8 including setting a maximum number of blocks in the history file such that at least one full updated block can be accommodated in the history file. (204)

10. A non-transitory computer readable medium having computer readable instructions stored thereon for execution by a processor (110) to perform the method according to either of claims 1 or 2.

11. A non-transitory computer readable medium having computer readable instructions stored thereon for execution by a processor (106) to perform the method according to any of claims 3 to 9.

12. The non-transitory computer readable medium of claim 10 or claim 11 comprising at least one from a group consisting of: a hard disk, a CD-ROM, an optical storage device, a magnetic storage device, a Read Only Memory, a Programmable Read Only Memory, an Erasable Programmable Read Only Memory, EPROM, an Electrically Erasable Programmable Read Only Memory and a Flash memory.
